# EUROPÄISCHE PATENTSCHRIFT

(11) **EP 1 169 665 B1**
(45) Veröffentlichungstag und Bekanntmachung des Hinweises auf die Patenterteilung: **03.11.2004**
(21) Anmeldenummer: 99968724.7
(22) Anmeldetag: 28.08.1999
(51) Int. Cl.: G02F 1/13, G02F 1/1345

(54) **ELEKTRONISCHE ANZEIGEVORRICHTUNG**
ELECTRONIC DISPLAY DEVICE
DISPOSITIF D'AFFICHAGE ELECTRONIQUE

(30) Priorität: 07.09.1998 DE 19840772
(43) Veröffentlichungstag der Anmeldung: 09.01.2002
(73) Patentinhaber: Element Displays Dr. Wiemer GmbH, 89134 Blaustein (DE)
(72) Erfinder: WIEMER, Wolfram, D-89134 Blaustein (DE)
(74) Vertreter: Fleck, Hermann-Josef, Dr.-Ing.
(86) Internationale Anmeldenummer: PCT/EP1999/006356
(87) Internationale Veröffentlichungsnummer: WO 2000/014596

(56) Entgegenhaltungen:
- DE-A- 2 054 733
- PATENT ABSTRACTS OF JAPAN vol. 1997, no. 02, 28. Februar 1997 (1997-02-28) & JP 08 271918 A (SEIKOSHA CO LTD), 18. Oktober 1996 (1996-10-18) -& JP 08 271918 A

## Beschreibung

Die Erfindung bezieht sich auf eine elektronische Anzeigevorrichtung mit mehreren nebeneinander angeordneten Anzeigezellen, die jeweils mindestens eine auf einem Träger aufgebrachte flächenhafte Ansteuerelektrode, eine dieser zugekehrte, auf einem weiteren Träger aufgebrachte Gegenelektrode und eine dazwischen liegende elektrooptisch wirksame Schicht aufweisen und die auf ihrer von der Sichtseite abgekehrten Rückseite mit einer gemeinsamen Abdeckscheibe versehen sind, und mit mehreren im wesentlichen senkrecht von der Rückseite her durch einen jeweiligen Durchbruch der Abdeckscheibe hindurch an die Ansteuerelektroden geführten und an diesen kontaktierten Anschlußdrähten.

Eine derartige elektronische Anzeigevorrichtung in Form einer Flüssigkristallanzeigevorrichtung ist in der US 4,824,215 als bekannt ausgewiesen. Bei dieser bekannten Vorrichtung besitzen Anzeigezellen jeweils vorderseitige, d.h. sichtseitige, und rückseitige Träger, zwischen denen eine Flüssigkristallschicht angeordnet ist. Der vorderseitige Träger in Form einer Frontplatte ragt mit einem Rand über den rückseitigen Träger hinaus, ist ansonsten aber mit diesem flächengleich. Die so gebildeten Flüssigkristallzellen sind auf einer Streuplatte angeordnet, die auf ihrer den Flüssigkristallzellen zugewandten Seite ein Muster von transparenten Leitungen aufweist. Der Kontakt zwischen den Flüssigkristallzellen und den transparenten Leitungen ist durch die Streuplatte geführte dünne Drähtchen hergestellt, die mittels leitendem Kleber an den überstehenden Randbereichen der frontseitigen Träger leitend angebracht sind. Infolge dieser Ausgestaltung mit einem überstehenden Randstreifen des frontseitigen Trägers ergibt sich bei der Gesamtanzeige ein relativ großer ungenutzter Anzeigebereich und die Gefahr von Kurzschlüssen, da beide Kontakte auf dem genannten überstehenden Randabschnitt angeordnet sind. Auch ist der Aufbau hinsichtlich einer automatischen Fertigung nicht einfach.

Eine weitere Flüssigkristall-Anzeigevorrichtung ist in der DE-A 20 54 733 angegeben. Bei dieser Anzeigevorrichtung sind auf einem Träger mehrere voneinander isolierte Elektrodenteile aufgebracht.

In dem Artikel von J.G. Grabmaier und H.H. Krüger "Flüssige Kristalle", VDI-Z 115 (1973), S. 629 sind weitere Beispiele für Flüssigkristall-Anzeigevorrichtungen angegeben. Bei diesen bekannten Flüssigkristall-Anzeigevorrichtungen sind deutlich erkennbare, störende Rasterstrukturen vorhanden, die auf den umlaufenden Kleberand zur Verbindung der beiden den Flüssigkristall umschließenden Glasplatten und den für die Kontaktierung benötigten zusätzlichen ein- oder zweiseitigen Rand zurückzuführen sind (vgl. auch SID Digest 1985, Seiten 58 bis 61). Es wurde versucht, die Störungen durch Lichtleitervorsätze zu kompensieren. Die erreichte Kompensation ist jedoch relativ gering. Zudem ist der Aufwand groß, da die Lichtleitervorsätze sehr genau justiert und fixiert werden müssen. Außerdem erschweren sie den reflektiven Betrieb.

In SPIE Vol. 526, 1985, Seiten 113 bis 116, wird eine Anzeige beschrieben, bei der einzelne Flüssigkristallzellen zur Darstellung der Bildpunkte verwendet werden. Auch hierbei treten die erwähnten Nachteile auf, wobei das Raster jeden Bildpunkt umgibt. Bei einer (monochromen) Bildpunktgröße von ca. 23 x 23 mm² wird eine Flächenausnutzung von weniger als 45 % erreicht, die bei kleinerer Bildpunktgröße noch weiter abnehmen würde.

Außer Flüssigkristallanzeigen zählen zu den elektronischen Anzeigevorrichtungen der vorliegenden Art auch elektrochrome Anzeigen oder Elektrolumineszenzanzeigen (s. z.B. P.M. Knoll, Displays, Hüthig-Verlag, Heidelberg, 1986).

Der Erfindung liegt die Aufgabe zugrunde, eine elektronische Anzeigevorrichtung der eingangs angegebenen Art bereit zu stellen, die hinsichtlich einer automatischen Fertigung vereinfacht aufgebaut ist und bei möglichst guter Anzeigequalität eine erhöhte Flächenausnutzung für den steuerbaren Anzeigebereich ergibt.

Diese Aufgabe wird mit den Merkmalen des Anspruches 1 gelöst. Die Merkmale des Oberbegriffs von Anspruch 1 sind aus DE 4 310 112 bekannt. Hiernach ist vorgesehen, dass jeweils mindestens zwei Anschlußdrähte mittels eines sie gemeinsam tragenden und voneinander elektrisch isolierenden stiftartigen Verbinders in den Durchbruch gesetzt sind, oder dass den Verbindern in der Funktion entsprechende Elemente in der Abdeckscheibe integriert sind. Mittels des isolierenden stiftartigen Verbinders, der maschinell einfach handhabbar ist, können gleichzeitig oder nachträglich die mindestens zwei Anschlußdrähte eingesetzt und eindeutig positioniert und geführt werden. Die Anschlußdrähte können dabei sehr dünn sein und ihrerseits leicht an entsprechend feinen Anschlußleitern und Kontaktflächen der Ansteuerelektroden und Gegenelektroden kontaktiert werden, so dass die Anzeigeflächen durch die Anschlüsse äußerst wenig eingeschränkt werden. Entsprechendes gilt auch bei in der Abdeckscheibe integrieten, in ihrer Funktion den Verbindern entsprechenden Elementen, insbesondere wenn die Abdeckscheibe gitterförmig ausgebildet ist.

Eine vorteilhafte Ausgestaltung der Verbinder zur Aufnahme der Anschlußdrähte und zum Einsetzen in die Anzeigevorrichtung sowie zur eindeutigen Kontaktierung besteht darin, dass die Verbinder einen Kopfteil, mit dem sie im eingesetzten Zustand auf der Rückseite der Anzeigevorrichtung aufsitzen, und einen durch den Durchbruch bis zur Ansteuerelektrode ragenden Schaft aufweisen und dass entlang des Schaftes mindestens zwei nutartige Vertiefungen ausgebildet sind, in denen die Anschlußdrähte gehalten und geführt sind. Die Verbinder mit Schaft und Kopfteil können gemeinsam in einem Strang hintereinander aus Kunststoff geformt und anschließend mit den in den Nuten anzuordnenden Drähten versehen werden. Zur Fertigung können sie dann zu einzelnen Verbindern von dem Strang abgelängt werden.

Die automatische Fertigung bei einfachem Aufbau und einfacher Kontaktierung wird weiterhin dadurch begünstigt, dass auf der Rückseite der Abdeckscheibe eine Leiterbahnfolie mit auf der Außenseite angeordneten Leiterbahnen aufgebracht ist und dass die Anschlußdrähte mit den zugeordneten Leiterbahnen kontaktiert sind.

Denkbar ist, die Kontaktierung durch die in der Abdeckscheibe vorgesehenen Durchbrüche von der Rückseite her vorzunehmen. Bei einer vorteilhaften alternativen Ausgestaltung ist jedoch vorgesehen, dass die Kontaktierung der Anschlußdrähte mit den Ansteuerelektroden von der Sichtseite her vorgenommen ist. Die Kontaktierung wird dabei vorgenommen, bevor die Frontseite der Anzeigezellen beispielsweise mittels der bei Flüssigkristallanzeigen üblichen Polarisationsfilter (Polfilter) abgedeckt wird. Dabei kann die Kontaktierung, die beispielsweise mittels Leitkleber erfolgt, kontrolliert und einfach von oben (von der Sichtseite her) mit einem Dispenser-Automaten aufgebracht und anschließend gut optisch kontrolliert und bei Bedarf auch noch nachgearbeitet werden.

Ist vorgesehen, dass mehrere Ansteuerelektroden einer Anzeigezelle durch mehrere voneinander isolierte leitende Flächenbereiche des jeweiligen Trägers gebildet sind, die mit zugeordneten leitenden Eckbereichen des jeweiligen oder gegenüberliegenden Trägers leitend in Verbindung stehen, und dass die leitenden Eckbereiche durch Entfernern der Eckbereiche des gegenüberliegenden Trägers für die Kontaktierung mit den Anschlußdrähten zugänglich gemacht sind, so können die Träger leicht vorbereitet werden, da insbesondere die Ecken z.B. durch Abbrechen leicht entfernbar sind. Gleichzeitig ergibt sich zwischen den einzelnen Anzeigezellen eine günstige Positionierungsmöglichkeit für die Verbinder, die bei rechteckiger oder quadratischer Form der Anzeigezellen zwischen vier in den Eckbereichen benachbarten Anzeigezellen angeordnet werden können. Auch nehmen die Kontaktflächen wenig Platz ein. Die Anzeigezellen können sehr eng nebeneinander angeordnet werden, wenn dabei nicht nur der der Kontaktfläche gegenüberliegende Eckbereich der zugehörigen Anzeigezelle entfernt ist, sondern auch ein kleinerer Eckbereich an dem die Kontaktfläche tragenden Träger entfernt ist, so dass der Verbinder in dem Eckbereich zwischen den benachbarten verschiedenen Anzeigezellen ungehindert und genau positioniert eingesetzt werden kann.

Durch die Maßnahmen, dass die Verbinder zwischen mindestens zwei benachbarten Anzeigezellen eingesetzt sind, und dass die voneinander isolierten Anschlußdrähte mit Ansteuerelektroden der verschiedenen benachbarten Anzeigezellen verbunden sind, können die Anschlußdrähte für die benachbarten Anzeigezellen mit dem Verbinder gleichzeitig oder nachträglich einfach eingesetzt werden, wobei z.B. die Anschlußdrähte für zwei, drei oder vier benachbarte rechteckige oder quadratische Anzeigezellen gleichzeitig zugeführt werden können. Die Anordnung von mehr als zwei Anschlußdrähten pro Verbinder ist z.B. geeignet, wenn der Träger pro Anzeigezelle in mehrere Flächenbereiche zum Bilden mehrerer Ansteuerelektroden aufgeteilt ist, wie sie etwa für eine Farbdarstellung benötigt werden.

Die Gegenelektrode kann grundsätzlich auch in der zuvor beschriebenen Weise kontaktiert und angeordnet werden. Eine vorteilhafte Alternative besteht jedoch darin, dass als Gegenelektrodenleitung ein zwischen der Abdeckscheibe und den Anzeigezellen angeordnetes, mit einer Metallfolie beschichtetes Schaumstoffband vorgesehen ist, dessen Breite höchstens 2 mm beträgt. Das Schaumstoffband kann dabei beispielsweise auch beidseitig beschichtet sein und z.B. eine Breite zwischen 1 mm und 1,5 mm aufweisen.

Für die Herstellung ist es günstig, dass die Verbindungen der Anschlußdrähte mit den jeweiligen Elektroden (Steuerelektroden und Gegenelektroden) mittels eines Leitklebers hergestellt sind.

Ein einfacher Aufbau gewünschter Größe läßt sich dadurch erzielen, dass eine Gruppe von Anzeigezellen auf lediglich einer Abdeckscheibe z.B. aus Acryl oder Polycarbonat angeordnet und verklebt sind, und dass die Übergangsstellen zwischen den einzelnen Anzeigezellen mit einer elastischen Vergußmasse ausgefüllt sind.

Je nach Anzeigebedingungen können vorteilhafte Aufbauten darin bestehen, dass eine Flüssigkristall-Anzeigevorrichtung eingesetzt wird, die für den Transmissions- und/oder den Reflexionsbetrieb mit sichtseitigen und rückseitigen Polfiltern und weiteren an sich bekannten Mitteln ausgelegt ist.

In der Normalausführung der Anzeige mit gekreuzten Polfiltern erscheinen die Kleberänder der einzelnen Anzeigezellen und die Bereiche zwischen den Zellen dunkel. Wenn das stört, können die sichtseitigen und rückseitigen Polfilter jeweils als parallele, beabstandete Streifen ausgebildet sind, die den Bereich zwischen den einzelnen Anzeigezellen und deren Kleberänder frei lassen, wobei die sichtseitigen und die rückseitigen Streifen rechtwinklig zueinander gekreuzt sind. Die Kleberänder der einzelnen Flüssigkristall-Anzeigezellen und Zellen-Zwischenräume erscheinen dann hell. Mit den streifenförmigen Polfiltern werden an den Kreuzungsstellen der sichtseitigen und rückseitigen Polfilter lediglich die Sichtfelder der Anzeigezellen abgedeckt, während die Kleberänder und die Bereiche zwischen den Anzeigezellen nur jeweils einfach von den Polfiltern abgedeckt sind. Damit werden die Kleberänder und Zellen-Zwischenräume so abgedunkelt, wie auch die hellen, spannungslosen Zellen, und es ergibt sich ein gleichmäßig heller Hintergrund.

Ein günstiger Aufbau für eine rückseitige Beleuchtung besteht darin, dass die Abdeckscheibe gitterförmig mit im Bereich von Anzeigestellen angeordneten Materialaussparungen ausgebildet ist. Dadurch werden auch Material und Gewicht eingespart.

Eine vorteilhafte Ausgestaltung besteht darin, dass eine rückseitige Beleuchtung mittels auf einer Platine angeordneter Leuchtdioden vorgesehen ist.

Die Montage und der Aufbau werden dadurch vereinfacht, dass die Ausbildung als Flüssigkristall(LCD-)anzeige zumindest ein auf der von der Sichtseite abgewandten Rückseite der Anzeige angeordnetes Polfilter sich über mehrere Anzeigezellen erstreckt. Hierbei erübrigt sich eine separate Trägerschicht zur Anordnung der Anzeigezellen.

Die Erfindung wird nachstehend anhand von Ausführungsbeispielen unter Bezugnahme auf die Zeichnungen näher erläutert. Es zeigen:
- Fig. 1: einen Querschnitt einer Flüssigkristallanzeigevorrichtung,
- Fig. 2: die Draufsicht einer Frontelektrode für Farbdarstellung mit Bereichen R, G und B sowie einer Kontaktfläche für die Gegenelektrode,
- Fig. 3: eine einzelne Flüssigkristallzelle in Draufsicht mit Aussparungen und Kontaktfläche für die Anschlußdrähte,
- Fig. 4: einen Ausschnitt aus einer Anzeigevorrichtung in Draufsicht mit gestrichelt dargestellten angesteuerten Anzeigezellen,
- Fig. 5: einen Querschnitt einer weiteren Ausführungsform der Flüssigkristall-Anzeigevorrichtung,
- Fig. 6: eine Anzeigezelle der Flüssigkristall-Anzeigevorrichtung nach Fig. 4 in Draufsicht und Seitenansicht,
- Fig. 7: einen Ausschnitt der Rückseite der Anzeigevorrichtung nach Fig. 5,
- Fig. 8: eine Detailansicht der Fig. 7 und
- Fig. 9: eine Seitenansicht und eine Draufsicht eines bei dem Ausführungsbeispiel gemäß den Fig. 4 bis 8 eingesetzten Verbinders.

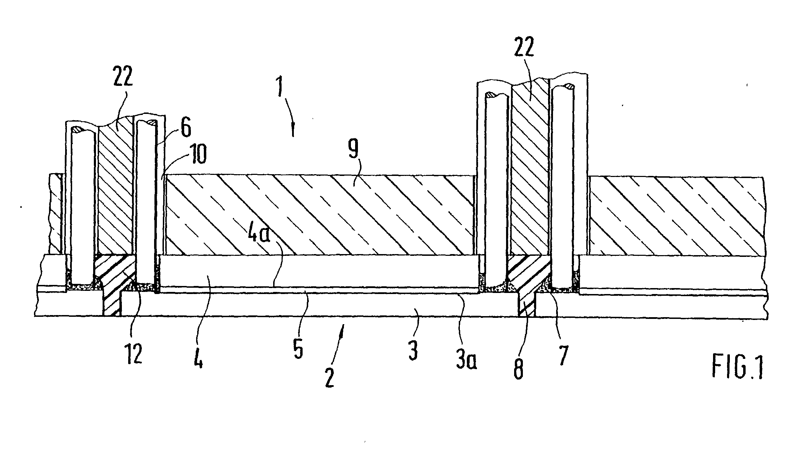

Fig. 1 zeigt den Querschnitt einer elektronischen Anzeigevorrichtung in Form einer Flüssigkristall-Anzeigevorrichtung 1. Unter einer auf der Rückseite der Flüssigkristall-Anzeigevorrichtung 1 befindlichen Abdeckscheibe 9, beispielsweise in Form einer opaken durchgehenden oder gitterförmigen, lichtstreuenden Acryl- oder Polycarbonatplatte, sind Flüssigkristallzellen 2 angeordnet und verklebt oder verkittet, von denen lediglich eine voll dargestellt ist, während rechts und links benachbart sich zwei weitere Flüssigkristallzellen 2 in der angedeuteten Weise anschließen.

Die einzelne Flüssigkristallzelle besteht aus einem front- bzw. sichtseitigen und einem rückseitigen Träger 3 bzw. 4, zwischen die eine Flüssigkristallschicht 5 eingebracht ist. Auf den der Flüssigkristallschicht 5 zugewandten Flächen der beiden Träger 3 und 4 sind transparente Flächenelektroden 3a und 4a aufgebracht, zwischen denen zum Betreiben der Anzeige eine Spannung angelegt wird. Die zum Sperren bzw. Durchlassen des Anzeigeniichts üblichen Polarisationsfilter sind in Fig. 1 nicht gezeigt, ebenso wie zusätzliche Schichten (Orientierungsschicht, Sperrschicht o.ä.) innerhalb der Zelle.

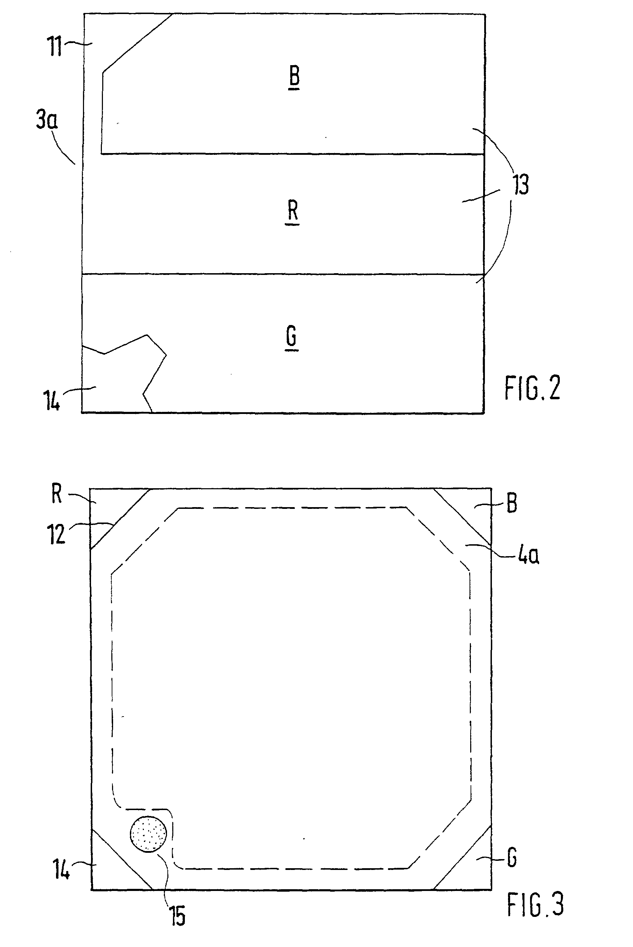

Bei dem rückseitigen Träger 4 ist seitlich jeweils eine Aussparung 12 zu erkennen, die sich mit entsprechenden Durchbrüchen 10 in der Abdeckscheibe 9 und den gegebenenfalls zusätzlichen Schichten deckt. Durch die Durchbrüche 10 und die Aussparungen 12 sind jeweils in seitliche Nuten von isolierenden stiftartigen Verbindern 22 eingelegte Anschlußdrähte 6 auf Kontaktflächen 11 und 14 der Steuerelektrode 3a und der Rückelektrode 4a geführt und an diesen beispielsweise mit Leitkleber 7 angeschlossen (s. Fig. 2 und 3). Die Übergangsstellen (typischerweise 0,2 mm bis 0,8 mm) zwischen den Flüssigkristallzellen 2 sind mit einer elastischen Vergußmasse 8 ausgefüllt. Die Vergußmasse 8 ist geeignet, unterschiedliche temperaturabhängige Ausdehnungen auszugleichen und gibt zudem Stabilität.

Fig. 2 zeigt die beispielsweise auf dem frontseitigen Träger 3 aufgebrachte Steuerelektrode 3a, die in drei (beispielsweise durch Ätzung) elektrisch voneinander isolierte Bereiche R, G und B für Farbdarstellung und eine davon isolierte Kontaktfläche 14 für die hier beispielsweise nicht in Bereiche unterteilte Gegenelektrode 4a aufgeteilt ist. Die Kontaktflächen 11 der Bereiche R, G und B, d.h. die Flächen, auf denen die Anschlußdrähte 6 angeschlossen werden, liegen, wie die Kontaktfläche 14 der Gegenelektrode 4a, in jeweils einer Ecke des frontseitigen Trägers 3, so dass alle vier Ecken belegt sind.

Mehrere ansteuerbare Teilbereiche einer Anzeigezelle lassen sich beispielsweise auch mit einem Multiplexbetrieb verwirklichen. Beispielsweise können hierbei die Elektrode des frontseitigen Trägers 3 in zwei in einer Richtung nebeneinanderliegende etwa hälftige Teilbereiche und die Elektrode des rückseitigen Trägers 4 in zwei gekreuzt dazu angeordnete weitere etwa hälftige Teilbereiche unterteilt und die so erhaltenen beiden frontseitigen Elektroden und die beiden rückseitigen Elektroden in einem 1:2 Multiplexbetrieb zur Steuerung der vier Teilsegmente angesteuert werden.

In Fig. 3 ist die Draufsicht einer noch nicht mit Anschlußdrähten 6 versehenen Flüssigkristallzelle 2 von der Rückseite her dargestellt. Die vier Ecken des rückseitigen Trägers 4 sind entfernt, so dass sich die Aussparungen 12 ergeben, durch die die Kontaktflächen 11 der Bereiche R, G und B und die Kontaktfläche 14 für die Gegenelektrode 4a frei zugänglich sind. Ein Dichtrand, mit dem ein Austreten der Flüssigkristallschicht aus dem Raum zwischen der Steuer- und der Gegenelektrode 3a bzw. 4a verhindert wird, ist gestrichelt eingezeichnet.

Eine leitende Verbindung 15 stellt den Anschluß zwischen der Gegenelektrode 4a und ihrer Kontaktfläche 14 auf dem frontseitigen Träger 3 her,

Module mit z.B. 8 mal 12 Flüssigkristallzellen 2 auf einer Abdeckscheibe 9 bzw. Acrylscheibe können mit Hilfe eines Acrylglasgitters zu praktisch nahtlosen Großanzeigen beliebiger Größe zusammengefügt werden. Der Abstand der aktiven Bereiche zweier Grenz-Flüssigkristallzellen 2 benachbarter Module wird dabei genauso groß wie der entsprechende Abstand zweier Zellen innerhalb eines Moduls. Er beträgt typischerweise 1,3 bis 3 mm. (Größere Abstände sind möglich.) Für Bildpunkte bei einem Raster von 10 mm ergibt sich eine Flächenausnutzung von bis zu 70 %, wobei die für die Kontaktierung zur Verfügung stehenden Kontaktflächen z.B. etwa 1 mm² betragen können. Anstelle der Abdeckscheibe 9 kann auch ein Spritzgussgitter, z.B. aus Polycarbonat oder einem anderen geeigneten Kunststoff vorgesehen sein, wobei die Anzeigebereiche von Material frei sein können. Dadurch ergibt sich ein Freiraum, in den z.B. Leuchtdioden zur Hinterleuchtung hineinragen können. Das Spritzgußgitter kann dabei auch so ausgeführt sein, dass die Funktion der Verbinder in diesen integriert ist, wobei z.B. Durchführlöcher und/oder Erhebungen auf der Leiterbahnseite vorgesehen sind zur isolation der Anschlussdrähte bzw. der entsprechenden leitenden Klebeverbindungen.

Die Zahl der isolierten Bereiche 13 einer Flüssigkristallzelle 2 und der Aussparungen 12 kann bei Bedarf erhöht werden, um z.B. mit verfeinerter Auflösung optische Muster erzeugen zu können. Dazu ist eine entsprechende Vergrößerung der Anzahl der Kontaktflächen 11 erforderlich. Dies kann durch angepaßte Außenkonturen der Anzeigezelle erreicht werden, z.B. ermöglicht eine sechseckige Zelle 6 einfach herzustellende Kontaktzonen an den Ecken.

Wichtig ist, dass einseitig freigelegte Ausbrüche für die Kontaktierung zur Verfügung stehen.

Die Flüssigkristall-Anzeigevorrichtung 1 kann mittels bekannter Maßnahmen transmissiv (mittels Hinterleuchtung) reflektiv (mittels frontseitiger Beleuchtung) oder transmissiv/reflektiv betrieben werden, wobei eine Anpassung an die äußeren Lichtverhältnisse möglich ist.

Als Verbindungsmaterial zwischen den Anschlußdrähten 6 und den Kontaktfiächen 11, 14 wird bei dem Ausführungsbeispiel gemäß Fig. 1 leitfähiger Kleber z.B. mit Hilfe eines Dispensers durch die Durchbrüche 10 der Abdeckscheibe 9 auf die Kontaktflächen 11, 14 der Zellen gegeben. Anschließend werden die gegeneinander isolierten Anschlußdrähte 6 gleichzeitig mit den Verbindern 22 oder nachträglich durch die Durchbrüche 10 eingesetzt. Der Leitkleber 7 wird ausgehärtet, die Anschlußdrähte 6 werden und mit den anderen Enden einer Letierbahnfolie 20 verbunden.

Wie eingangs ausgeführt, können die vorstehenden Maßnahmen zur Kontaktierung zweckmäßig nicht nur bei Flüssigkristall-Anzeigevorrichtungen, sondern auch bei ähnlich aufgebauten anderen elektronischen Anzeigevorrichtungen ergriffen werden, wie z.B. bei elektrochromen oder Elektrolumineszenz-Anzeigen. Hierzu sind die vorstehend beschriebenen Aussparungen und Durchbrüche in den entsprechenden Schichten vorzusehen.

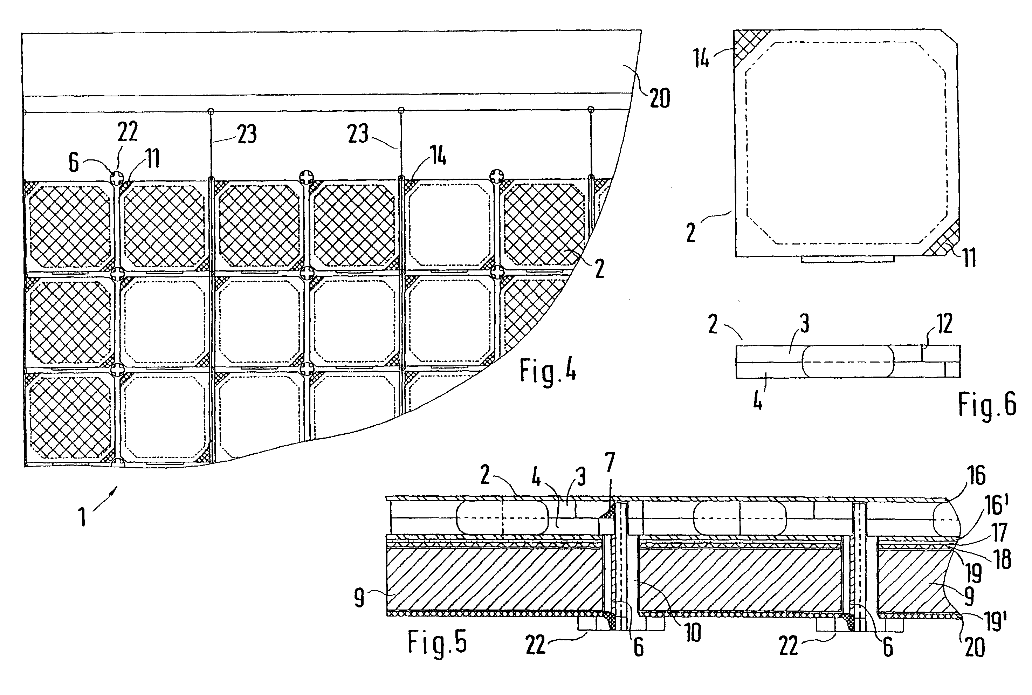

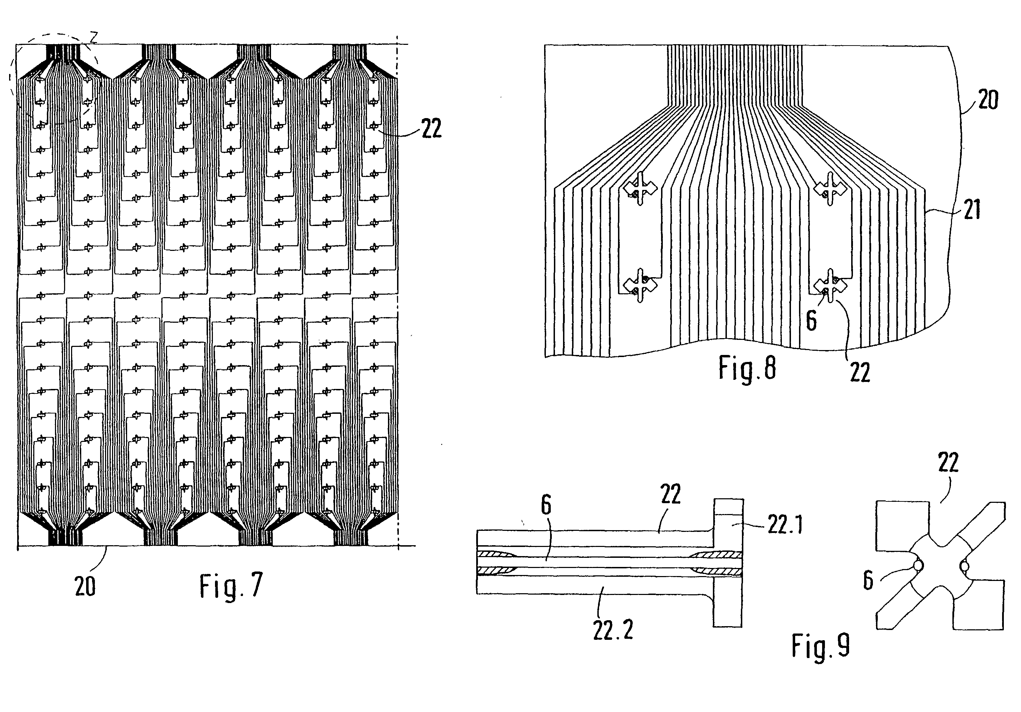

Die Fig. 4 bis 9 zeigen ein weiteres Ausführungsbeispiel der Flüssigkristall-Anzeigevorrichtung 1. In Fig. 4 ist ein Ausschnitt der Anzeigevorrichtung 1 von der Frontseite ohne Abdeckung gezeigt, wobei einige angesteuerte Anzeigezellen 2 strichliert dargestellt sind. Auf einer Seite der Anzeigezellen 2 sind in deren Eckbereichen senkrecht zur Anzeigeebene angeordnete Verbinder 22 mit im wesentlichen kreuzförmigem Querschnitt eingesetzt, so dass sich in Längsrichtung der Verbinder nutförmige Aufnahmen für die Anschlußdrähte 6 ergeben. Auf dieser Seite sind die Anzeigezellen 2, wie auch aus Fig. 6 ersichtlich, an den Ecken abgebrochen, und zwar sowohl der sichtseitige Träger 3 als auch der bei diesem Ausführungsbeispiel die Kontaktfläche tragende rückseitige Träger 4, wobei jedoch der entfernte Eckbereich des rückwärtigen Trägers 4 geringer ist als der entfernte Eckbereich des sichtseitigen Trägers 3. Es ist auch möglich, den Eckbereich des rückwärtigen Trägers 4 vollständig zu belassen. Die Kontaktfläche 11 des rückseitigen Trägers 4 ist von der Frontseite aus zugänglich und kann mit dem Anschlußdraht 6 auf der zugeordneten Seite des ihn haltenden isolierenden Verbinders 22 mittels Kontaktklebers beispielsweise mit einem Dispenser einfach automatisch kontaktiert werden. Entsprechend kann auch der gegenüberliegende Anschlußdraht 6 mit der ihm zugeordneten Anzeigezelle 2 einfach von der Frontseite (Sichtseite) her kontaktiert werden, um die entsprechende Ansteuerspannung an die Steuerelektroden anzulegen.

Auf der von den Verbindern 22 abgelegenen Seite der Anzeigezellen 2 sind diese, wie aus Fig. 4 weiterhin ersichtlich, mit Gegenelektrodenleitungen 23 verbunden. Diese Seiten der Anzeigezellen 2 sind lediglich im Bereich des frontseitigen Trägers in den Eckbereichen ausgespart, so dass die Kontaktfläche 14 der Gegenelektrode auf dem rückseitigen Träger 4 frei zugänglich ist, wie ebenfalls aus Fig. 6 ersichtlich. Auch hierbei kann die Kontaktierung mittels Leitklebers kontrolliert und einfach von oben (der Frontseite her) mit einem Dispenser-Automaten erfolgen und anschließend gut optisch kontrolliert und bei Bedarf auch noch nachgearbeitet werden. Als Gegenelektrodenleitung 23 wird ein gewellter Draht z.B. aus Silber verwendet, dessen Wellenform durch Flachklopfen senkrecht zur Wellenrichtung stabilisiert sein kann. Alternativ wird ein dünnes Schaumstoffband verwendet, auf das beidseitig eine dünne Metallfolie einer Breite von z.B. 1,5 mm aufgezogen ist. Beide Ausführungsformen ergeben einen elastischen und vibrationsbeständigen Kontakt. Die Gegenelektrodenleitung 23 ist dabei zwischen den Anzeigezellen angeordnet. Zwischen einem in Fig. 5 gezeigten Transflektor 18 und rückseitigen Polfilter 16' ist ein Formteil 17 eingebracht und festgelegt.

Soll der Träger 4, auf dem die Ansteuerelektroden 4a ausgebildet sind, für mehrere Ansteuerelektroden, beispielsweise durch Diagonalen unterteilt werden, um z.B. eine Farbdarstellung zu verwirklichen, so können auch in die beiden anderen Nuten der Verbinder 22 Anschlußdrähte 6 eingelegt und mit den beiden anderen der vier mit ihren Eckbereichen gegen den entsprechenden Verbinder 22 gerichteten Kontaktflächen verbunden werden.

In Fig. 5 ist der geschichtete Aufbau der Anzeigevorrichtung 1 sowie die Anordnung der Verbinder 22 zwischen den einzelnen Anzeigezellen 2 im Querschnitt ersichtlich. Die Anzeigevorrichtung weist demnach von der Sichtseite zur Rückseite einen frontseitigen Polfilter 16, die Träger 3 und 4 mit den dazwischen angeordneten (nicht gezeigten) Flüssigkristallen den rückseitigen Polfilter 16', das Formteil 17, den Transflektor 18, eine Verbindungsschicht 19 die Abdeckscheibe 9 eine weitere Verbindungsschicht 19' sowie die Leiterbahnfolie 20 mit Leiterbahnen 21 (vgl. Fig. 7 und 8) auf. Die in Fig. 9 vergrößert dargestellten Verbinder 22 liegen mit einem kreuzförmigen Kopfteil 22.1 auf der Rückseite der Leiterbahnfolie 20 auf und sind um ihre Achse so gedreht, dass die beiden Anschlußdrähte 6 den entsprechenden Leiterbahnen 21 (vgl. Fig. 7 und 8) zugekehrt sind. Mit ihrem Schaft 22.2 sind die Verbinder durch den Durchbruch 10 der Abdeckscheibe 9 bis in den Bereich des frontseitigen Trägers 3 geführt, so dass die entsprechenden Anschlußdrähte 6 mit der Kontaktfläche 11 mit Leitkleber 7 von der Frontseite aus bei noch nicht aufgebrachtem Polfilter 16 auf einfache Weise kontaktiert werden können. Das kopfseitige Ende des Anschlußdrahtes 6 wird mit der zugeordneten Leiterbahn 21 verbunden, wie in den Fig. 7 und 8 gezeigt.

Wie aus Fig. 9 genauer ersichtlich, sind die Anschlußdrähte 6 in die in Längsrichtung gebildeten Nuten des Kopfteils 22.1 und des Schaftes 22.2 der aus Kunststoff geformten Verbinder 22 eingelegt und darin beispielsweise am kopfseitigen Ende und am freien Ende des Schaftes verklebt oder mit angeformten Haltemitteln fixiert. Die Verbinder 22 können auch lediglich zur Isolation der Anschlußdrähte 6 dienen, ohne dass sie mit diesen verbunden sind. Die Anschlußdrähte 6 sind dadurch sicher voneinander isoliert und können mit einem Automaten leicht und positionsgerecht durch die verschiedenen Schichten der Anzeigevorrichtung 1 zu der jeweiligen Kontaktfläche geführt werden.

Die Verbinder 22 können in großer Anzahl auf einem fortlaufenden Strang geformt und schon mit den Anschlußdrähten 6 versehen werden. Bei der Fertigung können sie dann leicht im Bereich des Kopfteils getrennt und von der Rückseite her automatisch in die Durchbrüche der Abdeckscheibe 9 und weiteren Schichten eingesetzt werden.

Die beschriebene Anzeigevorrichtung kann vorteilhaft zur Positivdarstellung ausgebildet werden. In der Positivdarstellung werden dunkle Bildpunkte auf hellem Grund erzeugt. Dabei würden die üblicherweise schwarzen Kleberänder der Flüssigkristall(LCD)-Zellen und Zellen-Zwischenräume stören. Daher werden vorliegend auf dem Transflektor 18 unter Verwendung der Formteile 17, die mittels eines Distanzklebers gebildet werden können und einen Abstand zwischen dem rückwärtigen Polfilter 16' und dem Transflektor 18 im Bereich des Sichtfeldes der einzelnen Anzeigezellen 2 sicherstellen bzw. eine optische Ankopplung verhindern, eine dünne transparente doppelbrechungsfreie Folie aufgeklebt. Sie dient als Trageelement der Polfilter 16', die streifenförmig, z.B. horizontal aufgeklebt werden. Die Form und Breite der Polfilter 16' ist so ausgelegt, dass sie jeweils nur das Sichtfeld in der Breite abdecken, die Kleberänder und der Bereich zwischen den Anzeigezellen 2 bleibt zwischen den Streifen der Polfilter 16' frei. Der frontseitige Polfilter 16 wird ebenfalls streifenförmig, aber gekreuzt zu dem rückseitigen Polfilter 16' aufgebracht, wobei auch hierbei die zwischen den Streifen verlaufenden Kleberänder und Zellen-Zwischenräume frei bleiben und nur die Sichtfelder der Anzeigezellen 2 abgedeckt werden. Damit liegen die aktiven Bereiche der Anzeigezellen 2 jeweils zwischen den gekreuzten Polfiltern 16 und 16', im Bereich der Kleberänder und der Zellen-Zwischenräume befindet sich jedoch nur ein Polfilter 16 bzw. 16'. Damit werden diese passiven Zonen so abgedunkelt wie helle, spannungslose Zellen, und es ergibt sich ein gleichmäßiger heller Hintergrund.

Bei transflektivem Betrieb kann sowohl das von vorne auftreffende Licht als auch eine rückwärtige Beleuchtung eingesetzt werden. Üblicherweise wird für die rückwärtige Beleuchtung künstliches Licht z.B. von Fluoreszenzlampen eingesetzt. Besonders problematisch ist die Einsatzbedingung, wenn der Betrachter bei hinter der Anzeige tief stehender Sonne gegen das Licht auf die Anzeige schaut. Diese Problematik kann leicht dadurch gelöst werden, dass das Gehäuse der Anzeige durchscheinend ausgebildet wird. Dann kann das rückwärtige Licht zur Beleuchtung der Anzeige von hinten mit ausgenutzt werden. Die Anzeige wird dabei um so heller, je heller das Licht ist.

Die Polfilter 16, 16', insbesondere das hintere, können auch zum Verbinden und Fixieren der einzelnen Anzeigewellen 2 genutzt werden. Hierzu erstreckt sich zumindest der hintere Polfilter 16' über mehrere flächenhaft nebeneinanderliegende Anzeigezellen 2. Mehrere derartige Anzeigemodule können zu einer größeren Anzeige zusammengesetzt werden.

Anstelle der in Fig. 5 gezeigten Leiterbahnfolie 20 kann alternativ eine Platine angeordnet sein. Auf dieser können Leuchtdioden zur Hinterleuchtung der LCD-Anzeige und - z.B. in einem überstehenden seitlichen Abschnitt - Ansteuerschaltkreise vorgesehen sein. Die Leuchtdioden können dabei in flacher Ausführung in Oberflächenmontage (SMD-Technik) auf der Anzeigeseite der Platine oder auf der von der Anzeigeseite abgewandten Rückseite der Platine montiert sein, wobei sie mit ihrer Abstrahlseite in jeweiligen Durchbrüchen der Platine positioniert sind. Pro Teilbereich einer Anzeigezelle kann dabei mindestens eine Leuchtdiode vorgesehen sein. Auch bei dem Aufbau mit einer derartigen Platine ist die bereits erwähnte gitterförmige Abdeckscheibe 9 mit den darin vorgesehenen Aussparungen vorteilhaft. Auch ist es bei diesem Aufbau möglich, auf die Verbinder 22 zu verzichten, da die Anschlußdrähte 6 dann mit entsprechendem Abstand für eine sichere Isolierung z.B. mit zunehmendem gegenseitigem Abstand zur Platine geführt werden können. Auch ist es einfach möglich, in der Abdeckscheibe 9 getrennte Durchführungskanäle vorzusehen.

Die erfindungsgemäßen Maßnahmen ergeben somit bei vereinfachter automatischer Fertigung verbesserte Anzeigequalitäten und auch eine hohe Flächenausnutzung für die Anzeige.

## Patentansprüche

1. Elektronische Anzeigevorrichtung (1) mit mehreren nebeneinander angeordneten Anzeigezellen (2), die jeweils mindestens eine auf einem Träger (3 oder 4) aufgebrachte flächenhafte Ansteuerelektrode (3a oder 4a), eine dieser zugekehrte, auf einem weiteren Träger (4 oder 3) aufgebrachte Gegenelektrode (4a oder 3a) und eine dazwischen liegende elektrooptisch wirksame Schicht (5) aufweisen und die auf ihrer von der Sichtseite abgekehrten Rückseite mit einer gemeinsamen Abdeckscheibe (9) versehen sind, und mit mehreren im wesentlichen senkrecht von der Rückseite her durch einen jeweiligen Durchbruch (10) der Abdeckscheibe (9) hindurch an die Ansteuerelektroden (3a oder 4a) geführten und an diesen kontaktierten Anschlußdrähten (6),
**dadurch gekennzeichnet,**
**dass** jeweils mindestens zwei Anschlußdrähte (6) durch einen gemeinsamen Durchbruch (10) geführt sind, wobei die mindestens zwei Anschlussdrähte (6) mittels eines in den Durchbruch (10) eingesetzten stiftartigen Verbinders (22), der die mindestens zwei Anschlussdrähte gemeinsam trägt und voneinander elektrisch isoliert, in den Durchbruch (10) gesetzt sind, oder mittels eines dem Verbinder (22) in der Funktion entsprechenden Elementes, das in der Abdeckscheibe (9) integriert ist, durch den jeweiligen Durchbruch (10) geführt sind.

2. Anzeigevorrichtung nach Anspruch 1,
**dadurch gekennzeichnet,**
**dass** die Verbinder (22) einen Kopfteil (22.1), mit dem sie im eingesetzten Zustand auf der Rückseite der Anzeigevorrichtung (1) aufsitzen, und einen durch den Durchbruch (10) bis zur Ansteuerelektrode (3a oder 4a) ragenden Schaft (22.2) aufweisen und
**dass** entlang des Schaftes (22.2) mindestens zwei nutartige Vertiefungen ausgebildet sind, in denen die Anschlußdrähte (6) gehalten und geführt sind.

3. Anzeigevorrichtung nach Anspruch 1 oder 2,
**dadurch gekennzeichnet,**
**dass** auf der Rückseite der Abdeckscheibe (9) eine Leiterbahnfolie (20) mit auf der Außenseite angeordneten Leiterbahnen (21) aufgebracht ist und
**dass** die Anschlußdrähte (6) mit den zugeordneten Leiterbahnen (21) kontaktiert sind.

4. Anzeigevorrichtung nach einem der vorhergehenden Ansprüche,
**dadurch gekennzeichnet,**
**dass** die Kontaktierung der Anschlußdrähte (6) mit den Ansteuerelektroden (3a oder 4a) von der Sichtseite her vorgenommen ist.

5. Anzeigevorrichtung nach einem der vorhergehenden Ansprüche,
**dadurch gekennzeichnet,**
**dass** mehrere Ansteuerelektroden (3a oder 4a) einer Anzeigezelle (2) durch mehrere voneinander isolierte leitende Flächenbereiche des jeweiligen Trägers (3 oder 4) gebildet sind, die mit zugeordneten leitenden Eckbereichen (R,G,B, 11,14) des jeweiligen oder gegenüberliegenden Trägers (3 oder 4) leitend in Verbindung stehen, und
**dass** die leitenden Eckbereiche (R,G,B, 11, 14) durch Entfernern der Eckbereiche (Aussparungen 12) des gegenüberliegenden Trägers (4 oder 3) für die Kontaktierung mit den Anschlußdrähten (6) zugänglich gemacht sind.

6. Anzeigevorrichtung nach einem der vorhergehenden Ansprüche,
**dadurch gekennzeichnet,**
**dass** die Anzeigezellen rechteckig oder quadratisch sind.

7. Anzeigevorrichtung nach einem der vorhergehenden Ansprüche,
**dadurch gekennzeichnet,**
**dass** die Verbinder (22) zwischen mindestens zwei benachbarten Anzeigezellen (2) eingesetzt sind, und
**dass** die voneinander isolierten Anschlußdrähte (6) mit Ansteuerelektroden (3a oder 4a) der verschiedenen benachbarten Anzeigezellen (2) verbunden sind.

8. Anzeigevorrichtung nach einem der vorhergehenden Ansprüche,
**dadurch gekennzeichnet,**
**dass** als Gegenelektrodenleitung (23) ein zwischen der Abdeckscheibe (9) und den Anzeigezellen (2) angeordnetes, mit einer Metallfolie beschichtetes Schaumstoffband oder ein gewellter Draht vorgesehen ist, dessen Breite höchstens 2 mm beträgt.

9. Anzeigevorrichtung nach einem der vorhergehenden Ansprüche,
**dadurch gekennzeichnet,**
**dass** die Verbindungen der Anschlußdrähte (6) mit den jeweiligen Elektroden (3a oder 4a) mittels eines Leitklebers (7) hergestellt sind.

10. Anzeigevorrichtung nach einem der vorhergehenden Ansprüche,
**dadurch gekennzeichnet,**
**dass** eine Gruppe von Anzeigezellen (2) auf lediglich einer Abdeckscheibe (9) z.B. aus Acryl oder Polycarbonat angeordnet und verklebt sind, und dass die Übergangsstellen zwischen den einzelnen Anzeigezellen (2) mit einer elastischen Vergußmasse (8) ausgefüllt sind.

11. Anzeigevorrichtung nach einem der vorhergehenden Ansprüche,
**dadurch gekennzeichnet,**
**dass** für die Anzeigezellen (2) eine Flüssigkristall-Anzeigevorrichtung (1) eingesetzt wird, die für den Transmissions- und/oder den Reflexionsbetrieb mit sichtseitigen und rückseitigen Polfiltern (16) ausgelegt ist.

12. Anzeigevorrichtung nach Anspruch 11,
**dadurch gekennzeichnet,**
**dass** die sichtseitigen und rückseitigen Polfilter (16) jeweils als parallele, beabstandete Streifen ausgebildet sind, die den Bereich zwischen den einzelnen Anzeigezellen (2) und deren Kleberänder frei lassen, wobei die sichtseitigen und die rückseitigen Streifen rechtwinklig zueinander gekreuzt sind.

13. Anzeigevorrichtung nach einem der vorhergehenden Ansprüche,
**dadurch gekennzeichnet,**
**dass** sie ein transparentes Gehäuse aufweist.

14. Anzeigevorrichtung nach einem der vorhergehenden Ansprüche,
**dadurch gekennzeichnet,**
**dass** die Abdeckscheibe (9) gitterförmig mit im Bereich von Anzeigestellen angeordneten Materialaussparungen ausgebildet ist.

15. Anzeigevorrichtung nach Anspruch 14 wenn abhängig von Anspruch 3,
**dadurch gekennzeichnet,**
**dass** die in der Abdeckscheibe (9) integrierten Elemente Durchführlöcher und Erhebungen auf der der Leiterbahn zugekehrten Seite sind.

16. Anzeigevorrichtung nach einem der vorhergehenden Ansprüche,
**dadurch gekennzeichnet,**
**dass** eine rückseitige Beleuchtung mittels auf einer Platine angeordneter Leuchtdioden vorgesehen ist.

17. Anzeigevorrichtung nach einem der vorhergehenden Ansprüche,
**dadurch gekennzeichnet,**
**dass** bei der Ausbildung der Anzeigezellen (2) als Flüssigkristall anzeige zumindest ein auf der von der Sichtseite abgewandten Rückseite der Anzeige angeordnetes Polfilter (16') sich über mehrere Anzeigezellen (2) erstreckt.

## Claims

1. Electronic display device (1), having a plurality of adjacently disposed display cells (2) which have respectively at least one two-dimensional actuation electrode (3a or 4a), which is applied on a carrier (3 or 4), a counter-electrode (4a or 3a), which is orientated towards said actuation electrode and applied on a further carrier (4 or 3), and an electro-optically effective layer (5) situated therebetween and which are provided with a common cover disc (9) on their rear side which is orientated away from the visible side, and having a plurality of connection wires (6), which are guided substantially perpendicularly from the rear side through a respective opening (10) of the cover disc (9) to the actuation electrodes (3a or 4a) and are contacted on the latter,
**characterised in that**
respectively at least two connection wires (6) are guided through a common opening (10), the at least two connection wires (6) being placed in the opening (10) by means of a pin-like connector (22), which is inserted into the opening (10), said connector carrying the at least two connection wires together and isolating them electrically from each other, or being guided through the respective opening (10) by means of one element which corresponds to the connector (22) in function, said element being integrated into the cover disc (9).

2. Display device according to claim 1,
**characterised in that**
the connectors (22) have a head part (22.1), with which they sit in the inserted state on the rear side of the display device (1), and a shaft (22.2) which protrudes through the opening (10) up to the actuation electrode (3a or 4a) and
**in that** at least two groove-like recesses are configured along the shaft (22.2), into which recesses the connection wires (6) are retained and guided.

3. Display device according to claim 1 or 2,
**characterised in that**
a conductive track film (20) with conductive tracks (21) which are disposed on the outside is applied on the rear side of the cover disc (9) and
**in that** the connection wires (6) are contacted with the associated conductive tracks (21).

4. Display device according to one of the preceding claims,
**characterised in that**
the contacting of the connection wires (6) with the actuation electrodes (3a or 4a) is effected from the visible side.

5. Display device according to one of the preceding claims,
**characterised in that**
a plurality of actuation electrodes (3a or 4a) of one display cell (2) are formed by a plurality of conductive surface regions of the respective carrier (3 or 4), which are isolated from each other and are in communication conductively with associated conductive corner regions (R, G, B, 11, 14) of the respective or oppositely situated carrier (3 or 4), and
**in that** the conductive corner regions (R, G, B, 11, 14) are made accessible for contacting with the connection wires (6) by removing the corner regions (gaps 12) of the oppositely situated carrier (4 or 3).

6. Display device according to one of the preceding claims,
**characterised in that**
the display cells are rectangular or square.

7. Display device according to one of the preceding claims,
**characterised in that**
the connectors (22) are inserted between at least two adjacent display cells (2) and
**in that** the connection wires (6), which are isolated from each other, are connected to actuation electrodes (3a or 4a) of the various adjacent display cells (2).

8. Display device according to one of the preceding claims,
**characterised in that**
there is provided as counter-electrode line 23), a foam material strip, which is disposed between the cover disc (9) and the display cells (2) and coated with a metallic foil, or a corrugated wire, the width of which is at most 2 mm.

9. Display device according to one of the preceding claims,
**characterised in that**
the connections of the connection wires (6) to the respective electrodes (3a or 4a) are produced by means of a conductive adhesive (7).

10. Display device according to one of the preceding claims,
**characterised in that**
a group of display cells (2) is disposed and glued solely on one cover disc (9), e.g. made of acrylic or polycarbonate, and
**in that** the transition points between the individual display cells (2) are filled with an elastic sealing compound (8).

11. Display device according to one of the preceding claims,
**characterised in that**
a liquid crystal display device (1) for the display cells (2) is used, which is designed for the transmission and/or reflection operation with pole filters (16) on the visible side and on the rear side.

12. Display device according to claim 11,
**characterised in that**
the visible side and rear-side pole filters (16) are configured respectively as parallel, spaced strips which keep the region between the individual display cells (2) and their adhesive edges free, the visible side and the rear-side strips being intersected at right angles relative to each other.

13. Display device according to one of the preceding claims,
**characterised in that**
it has a transparent housing.

14. Display device according to one of the preceding claims,
**characterised in that**
the cover disc (9) has a grating-like configuration with material gaps disposed in the region of display points.

15. Display device according to claim 14, if dependent upon claim 3,
**characterised in that**
the elements integrated into the cover disc (9) are lead-through holes and raised portions on the side orientated towards the conductive track.

16. Display device according to one of the preceding claims,
**characterised in that**
a rear-side illumination is provided by means of light diodes disposed on a circuit board.

17. Display device according to one of the preceding claims,
**characterised in that**,
in the configuration of the display cells (2) as liquid crystal display, at least one pole filter (16'), which is disposed on the rear side of the display orientated away from the visible side, extends over a plurality of display cells (2).

## Revendications

1. Dispositif d'affichage électronique (1) avec plusieurs cellules d'affichage (2), disposées les unes à côté des autres, qui présentent respectivement au moins une électrode d'amorçage plane (3a ou 4a), apposée sur un support (3 ou 4), une contre-électrode (4a ou 3a), apposée sur un autre support (4 ou 3) et une couche (5), active électro-optiquement, située entre celles-ci et qui sont munies sur leur face arrière, détournée de la face visuelle, d'une plaque de recouvrement (9) commune et avec plusieurs fils de raccordement (6), guidés essentiellement verticalement depuis la face arrière, à travers un passage respectif (10) de la plaque de recouvrement (9), sur les électrodes d'amorçage (3a ou 4a) et mises en contact contre celles-ci,
**caractérisé en ce**
**que**, respectivement, au moins deux fils de raccordement (6) sont guidés à travers un passage commun (10), les au moins deux fils de raccordement (6) étant posés dans le passage (10), au moyen d'un raccord (22), de type cheville, placé dans le passage (10), raccord qui porte collectivement et les isole électriquement l'un de l'autre au moins deux fils de raccordement ou qui sont guidés à travers le passage respectif (10), au moyen d'un élément, correspondant, dans la fonction visée, au raccord (22), qui est intégré dans la plaque de recouvrement (9).

2. Dispositif d'affichage selon la revendication 1,
**caractérisé en ce**
**que** les raccords (22) présentent une partie de tête (22.1), avec laquelle ils reposent, à l'état posé, sur la face arrière du dispositif d'affichage (1) et une tige (22.2), se dressant, à travers le passage (10) jusqu'à l'électrode d'amorçage (3a ou 4a) et
**que** sont constitués, le long de la tige (22.2), au moins deux évidements de type rainure, dans lesquels sont maintenus et guidés les fils de raccordement (6).

3. Dispositif d'affichage selon la revendication 1 ou 2,
**caractérisé en ce**
**qu'**il est apposé, sur la face arrière de la plaque de recouvrement (9), un film de pistes conductives (20), avec des pistes conductives (21), disposées sur la face extérieure
et
**que** les fils de raccordement (6) sont mis en contact avec les pistes conductives (21) affectées.

4. Dispositif d'affichage selon l'une des revendications précédentes,
**caractérisé en ce**
**qu'**il est procédé à l'établissement du contact des fils de raccordement (6) avec les électrodes d'amorçage (3a ou 4a) depuis la face visuelle.

5. Dispositif d'affichage selon l'une des revendications précédentes,
**caractérisé en ce**
**que** plusieurs électrodes d'amorçage (3a ou 4a) d'une cellule d'affichage (2) sont formées par le biais de plusieurs zones de surface du support respectif (3 ou 4), conductrices, isolées les unes des autres, qui sont en liaison de manière conductrice avec des zones d'angle conductrices (R, G, B, 11, 14), affectées, du support respectif ou opposé (3 ou 4)
et
**que** les zones d'angle conductrices (R, G, B, 11, 14) sont rendues accessibles par le biais de la suppression des zones d'angle (creux 12) du support opposé (4 ou 3), pour l'établissement du contact avec les fils de raccordement (6).

6. Dispositif d'affichage selon l'une des revendications précédentes,
**caractérisé en ce**
**que** les cellules d'affichage sont rectangulaires ou carrées.

7. Dispositif d'affichage selon l'une des revendications précédentes,
**caractérisé en ce**
**que** les raccords (22) sont posés entre au moins deux cellules d'affichage (2) voisines
et
**que** les fils de raccordement (6), isolés les uns des autres, sont reliés aux électrodes d'amorçage (3a ou 4a) des différentes cellules d'affichage (2) voisines.

8. Dispositif d'affichage selon l'une des revendications précédentes,
**caractérisé en ce**
**qu'**il est prévu, en tant que ligne de contre-électrodes (23), une bande de mousse synthétique ou un fil ondulé, disposé(e) entre la plaque de recouvrement (9) et les cellules d'affichage (2), recouvert(e) d'un film de métal, dont la largeur fait au plus 2 mm.

9. Dispositif d'affichage selon l'une des revendications précédentes,
**caractérisé en ce**
**que** les jonctions des fils de raccordement (6) avec les électrodes respectives (3a ou 4a) sont établies au moyen d'une colle conductrice (7).

10. Dispositif d'affichage selon l'une des revendications précédentes,
**caractérisé en ce**
**qu'**un groupe de cellules d'affichage (2) est disposé et collé uniquement sur une plaque de recouvrement (9), par ex. : en acrylique ou polycarbonate et que les cellules de transition entre les diverses cellules d'affichage (2) sont remplies avec une masse de scellement élastique (8).

11. Dispositif d'affichage selon l'une des revendications précédentes,
**caractérisé en ce**
**qu'**il est mis en oeuvre, pour les cellules d'affichage (2) un mécanisme d'affichage à cristaux liquides (1), qui est conçu pour le mode de transmission et / ou de réflexion avec des filtres de polarité côté visuel et côté arrière (16).

12. Dispositif d'affichage selon la revendication 11,
**caractérisé en ce**
**que** les filtres de polarité côté visuel et côté arrière (16) sont constitués respectivement en tant que bandes espacées, parallèles, qui laissent libre la zone entre les diverses cellules d'affichage (2) et leurs bords de collage, les bandes, côté visuel et côté arrière, se croisant mutuellement à angles droits.

13. Dispositif d'affichage selon l'une des revendications précédentes,
**caractérisé en ce**
**qu'**il présente un boîtier transparent.

14. Dispositif d'affichage selon l'une des revendications précédentes,
**caractérisé en ce**
**que** la plaque de recouvrement (9) est constituée en treillis, avec des creux de matériau, disposés dans la zone des cellules d'affichage.

15. Dispositif d'affichage selon la revendication 14, si elle est fonction de la revendication 3,
**caractérisé en ce**
**que** les éléments, intégrés dans la plaque de recouvrement (9), sont des trous de passage et des élévations, sur le côté tourné vers la piste conductive.

16. Dispositif d'affichage selon l'une des revendications précédentes,
**caractérisé en ce**
**qu'**un éclairage arrière est prévu au moyen de diodes électroluminescentes, disposées sur une platine.

17. Dispositif d'affichage selon l'une des revendications précédentes,
**caractérisé en ce**
**que**, lors de la constitution des cellules d'affichage (2) en tant qu'affichage à cristaux liquides, au moins un filtre de polarité (16'), disposé sur la face arrière de l'affichage, détournée de la face visuelle, s'étend sur plusieurs cellules d'affichage (2).
